# EUROPEAN PATENT APPLICATION

(11) **EP 4 582 834 A1**
(43) Date of publication of application: **09.07.2025**
(21) Application number: 23858563.2
(22) Date of filing: 28.02.2023
(51) Int. Cl.: G01S 7/481, G01S 17/931

(54) **LASER RADAR**

(30) Priority: 30.08.2022 CN 202211048493
(71) Applicant: Hesai Technology Co., Ltd., Shanghai 201821 (CN)
(72) Inventor: XU, Qingyu, Shanghai 201815 (CN); WU, Shixiang, Shanghai 201815 (CN); YE, Liangchen, Shanghai 201815 (CN); GAO, Yongfeng, Shanghai 201815 (CN); XIANG, Shaoqing, Shanghai 201815 (CN)
(74) Representative: Pfenning, Meinig & Partner mbB
(86) International application number: PCT/CN2023/078590
(87) International publication number: WO 2024/045520

(57) **Abstract**

This disclosure provides a LiDAR, including: an emitter module configured to emit a detection laser beam; a receiver module configured to receive an echo laser beam of the detection laser beam reflected by a target object; a scanner module configured to scan the detection laser beam and the echo laser beam; and an optomechanics module having a preset height and configured to mount an optics device of the LiDAR. The emitter module and the receiver module are arranged on two sides of the optomechanics module , respectively. The emitter module, the receiver module, and the scanner module are arranged within the preset height of the optomechanics module. For the LiDAR provided in this disclosure, the height of the LiDAR can be reduced, so that the LiDAR is miniaturized in structure, the assembly and production of the LiDAR are facilitated, the requirements for a mounting environment in a vehicle body can be met, and easy compatibility and integration with the vehicle body are achieved.

## Description

### TECHNICAL FIELD

This disclosure relates to the field of environmental perception and, in particular, to a LiDAR.

### BACKGROUND

The LiDAR is an important sensor for perceiving surrounding information. With the gradual development of forward-sensing LiDARs, it has become increasingly important in the field of mass-produced vehicles to better mount a LiDAR onto a vehicle body (even the inner side of a windshield.).

A region near a rearview mirror on the inner side of the windshield of the vehicle body is typically occupied by devices such as a main camera, the heights of these devices are low, and the existing LiDAR is higher than these devices, so that the requirement for arrangement of the existing LiDAR in the region near the rearview mirror on the inner side of the windshield of the vehicle body is not met. When it is needed to mount the LiDAR onto an external vehicle body (e.g., a front vehicle roof), it is also needed to design the LiDAR with a sufficiently low height to comply with the motion conditions and the overall appearance design of the vehicle body. However, the height of the existing LiDAR hardly meets the actual design requirements of the vehicle body, and it is difficult for the LiDAR to strike a balance between small size and performance parameters.

Accordingly, how to reduce the height of the LiDAR has become a technical problem that urgently needs to be solved.

### SUMMARY

In view of the technical problems, this disclosure provides a LiDAR to reduce the height of the LiDAR, so that the LiDAR is miniaturized in structure, the assembly and production of the LiDAR are facilitated, the requirements for a mounting environment in a vehicle body can be met, and easy compatibility and integration with the vehicle body are achieved.

To solve the above problems, embodiments of this disclosure provide a LiDAR, including:
an emitter module configured to emit a detection laser beam;
a receiver module configured to receive an echo laser beam of the detection laser beam reflected by a target object;
a scanner module configured to scan the detection laser beam and the echo laser beam; and
an optomechanics module having a preset height and configured to mount an optics device of the LiDAR.

The emitter module and the receiver module are arranged on two sides of the optomechanics module, respectively.

The emitter module, the receiver module, and the scanner module are arranged within the preset height of the optomechanics module.

Optionally, the scanner module includes:
a first scanner module configured to scan the laser beam in a first direction; and
a second scanner module configured to scan the laser beam in a second direction perpendicular to the first direction.

Optionally, in a height direction of the LiDAR, a ratio of a height of the scanner module to a height of the LiDAR is greater than or equal to 0.72.

Optionally, a ratio of a height of the first scanner module to a height of the LiDAR is greater than or equal to 0.72.

Optionally, the first scanner module includes:
a first scanning mirror; and
a first driver device, where a ratio of a height of the first scanning mirror to a height of the first driver device is 1.

Optionally, the first driver device includes:
a magnetic component; and
a fixing component that includes a torsion beam configured to fix the first scanning mirror, where the torsion beam has an extension direction parallel to the second direction and is configured to drive the first scanning mirror to reciprocate with the torsion beam as an axis.

The magnetic component and the first scanning mirror are arranged on two sides of the fixing component, respectively.

Optionally, the second scanner module is configured to scan and direct a first scanned laser beam formed by the first scanner module to the outside of the LiDAR, and scan and direct the echo laser beam onto the first scanner module.

Optionally, a ratio of a height of the second scanner module to a height of the LiDAR is greater than or equal to 0.8.

Optionally, the second scanner module includes:
a second scanning mirror; and
a second driver device, where a ratio of a height of the second scanning mirror to a height of the second driver device is greater than 1.

Optionally, an angle between an optical axis of the laser beam directed onto a first scanning mirror of the first scanner module and the first scanning mirror at an initial position ranges from 50° to 60°.

Optionally, an angle between an optical axis of a first scanned laser beam formed by the first scanner module at an initial position and a second scanning mirror of the second scanner module at an initial position ranges from 30° to 40°, and an optical axis of a second scanned laser beam formed by reflecting the first scanned laser beam by the second scanning mirror at the initial position is perpendicular to a window of the LiDAR.

Optionally, with an initial position of a first scanning mirror of the first scanner module as a center, the first scanning mirror reciprocates at an angle ranging from 4° to 8° in the second direction, and is configured to scan the laser beam directed onto the first scanning mirror in the first direction.

Optionally, with an initial position of a second scanning mirror of the second scanner module as a motion center, the second scanning mirror reciprocates at an angle ranging from 15° to 30° in the first direction, and is configured to scan the laser beam directed onto the second scanning mirror in the second direction.

Optionally, a scanning direction of the first scanner module is a fast-axis direction of the scanner module when scanning, and a scanning direction of the second scanner module is a slow-axis direction of the scanner module when scanning.

Optionally, the emitter module and the receiver module are mounted on the optomechanics module, and extension directions of the emitter module and the receiver module are perpendicular to a height direction of the LiDAR.

Optionally, in a height direction of the LiDAR, the emitter module and the receiver module are arranged on two sides of the optomechanics module, respectively.

Optionally, the emitter module and the receiver module are obliquely and symmetrically arranged on two sides of the optomechanics module, respectively.

Optionally, the optics device includes:
a receiving deflecting mirror configured to reflect the received echo laser beam through the optomechanics module and vertically direct the echo laser beam onto the receiver module.

Optionally, the optics device further includes:
a light homogenizing component arranged close to one end of the emitter module and configured to change a shape of a light spot formed by the detection laser beam.

Optionally, the optics device further includes:
an emitting deflecting mirror arranged adjacent to the emitter module along a height direction of the LiDAR and configured to reflect the detection laser beam through the optomechanics module and vertically direct the detection laser beam onto the optics device of the optomechanics module.

Optionally, the optics device further includes:
a collimator unit, including:
a fast-axis collimating lens arranged at an upstream part of the light homogenizing component along a transmission direction of the detection laser beam and configured to change a shape of a light spot formed by the detection laser beam in a fast-axis direction; and
a slow-axis collimating lens arranged at a downstream part of the light homogenizing component along the transmission direction of the detection laser beam and configured to change a shape of a light spot formed by the detection laser beam in a slow-axis direction.

Optionally, the light homogenizing component includes a cylindrical lens array.

Optionally, the cylindrical lens array includes a plurality of cylindrical lens units arranged in sequence along a height direction of the LiDAR and configured to change the shape of the light spot formed by the detection laser beam.

Optionally, the optomechanics module includes a lens barrel and a mounter unit. The optics device further includes:
a positive lens, a wave plate, and a first negative lens that are mounted in the lens barrel; and
a second negative lens, a beam splitter unit, a collimator unit, a receiving deflecting mirror, and a light homogenizing component that are mounted in the mounter unit communicating with the lens barrel.

Optionally, the mounter unit and the lens barrel are arranged in the optomechanics module or a lens barrel structure of optical components, and the lens barrel structure of optical components is detachably mounted on the optomechanics module.

Optionally, the mounter unit and the lens barrel are located on a same surface of the optomechanics module.

Optionally, the mounter unit is arranged in the optomechanics module, and the lens barrel is detachably mounted in the optomechanics module.

Optionally, the lens barrel structure of optical components is integrally formed with an emitter module fixing portion of the LiDAR, and the emitter module fixing portion is configured to fixedly mount the emitter module.

Optionally, the lens barrel structure of optical components is integrally formed with an emitter module fixing portion of the LiDAR and a receiver module fixing portion of the LiDAR, and the receiver module fixing portion is configured to fixedly mount the receiver module.

Compared with the existing technology, the technical solutions in the embodiments of this disclosure have the following advantages:
A LiDAR provided in embodiments of this disclosure includes: an emitter module configured to emit a detection laser beam; a receiver module configured to receive an echo laser beam of the detection laser beam reflected by a target object; a scanner module configured to scan the detection laser beam and the echo laser beam; and an optomechanics module having a preset height and configured to mount an optics device of the LiDAR. The emitter module and the receiver module are arranged on two sides of the optomechanics module, respectively. The emitter module, the receiver module, and the scanner module are arranged within the preset height of the optomechanics module. In this way, in the LiDAR provided in the embodiments of this disclosure, the emitter module, the receiver module, and the scanner module are arranged within the preset height of the optomechanics module, thereby reducing the height of the overall structure of the LiDAR. It can be seen that in the LiDAR provided in the embodiments of this disclosure, the emitter module and the receiver module are arranged on two sides of the optomechanics module, respectively, and the emitter module, the receiver module, and the scanner module are arranged within the preset height of the optomechanics module, so that the height of the overall structure of the LiDAR can be reduced, thereby miniaturizing the LiDAR in structure, facilitating the assembly and production of the LiDAR, meeting the requirements for a mounting environment in a vehicle body, and making it easy to be compatible with and integrate with the vehicle body.

Optionally, in the LiDAR provided in the embodiments of this disclosure, the ratio of the height of the first scanner module to the height of the LiDAR is greater than or equal to 0.72. The height of the LiDAR is further reduced by a structure for setting the first scanner module mounted inside the LiDAR to be lower than the LiDAR.

Optionally, the ratio of the height of the second scanner module to the height of the LiDAR is greater than or equal to 0.8. The height of the LiDAR is further reduced by setting the second scanner module mounted inside the LiDAR to be lower than the LiDAR.

Optionally, in the LiDAR provided in the embodiments of this disclosure, the first scanner module includes: the first scanning mirror; and the first driver device, where the ratio of the height of the first scanning mirror to the height of the first driver device is 1. In this way, the main structures (the first scanning mirror and the first driver device) forming the first scanner module are set to have the same height. During actual design, it is only needed to ensure that the height of one of the structures is minimized, and the height of the other structure will also be minimized, thereby achieving minimization of the height of the first scanner module.

Optionally, in the LiDAR provided in the embodiments of this disclosure, the emitter module and the receiver module are mounted on the optomechanics module, and extension directions of the emitter module and the receiver module are both perpendicular to the height direction of the LiDAR. In this way, the emitter module and the receiver module of the LiDAR are arranged on the optomechanics module in the direction perpendicular to the height of the LiDAR. To enable the LiDAR to emit and receive the laser beam reliably, optics devices in the optomechanics module are placed in a plane perpendicular to the height direction of the LiDAR, so that the space occupied by the receiver module and the emitter module in the height direction can be reduced, thereby further reducing the height of the LiDAR, achieving flat design of the LiDAR, and improving the integration level of the LiDAR.

Optionally, in the LiDAR provided in the embodiments of this disclosure, the optics device includes the light homogenizing component arranged close to one end of the emitter module and configured to change the shape of the light spot formed by the detection laser beam. Thus, when the LiDAR works, lasers of the emitter module emit detection laser beams. The detection laser beams emitted from the multiple lasers can be homogenized by the light homogenizing component arranged close to one end of the emitter module, thereby forming a linear light spot.

### BRIEF DESCRIPTION OF DRAWINGS

To more clearly illustrate the technical solutions in the embodiments of this disclosure or in the existing technology, the accompanying drawings that need to be used in the description of the embodiments or the existing technology will be briefly introduced below. Apparently, the accompanying drawings in the description below merely illustrate the embodiments of this disclosure. Those of ordinary skill in the art can also derive other accompanying drawings from the provided accompanying drawings without creative efforts.
Fig. 1 shows a schematic diagram of an external structure of a LiDAR, provided in embodiments of this disclosure;
Fig. 2 shows a schematic diagram of an internal structure of a LiDAR, provided in embodiments of this disclosure;
Fig. 3 shows a top view of an internal structure of a LiDAR, provided in embodiments of this disclosure;
Fig. 4 shows a schematic diagram of an exploded structure of a LiDAR, provided in embodiments of this disclosure;
Fig. 5 shows a schematic structural diagram of a first scanner module of a LiDAR, provided in embodiments of this disclosure;
Fig. 6 shows another schematic structural diagram of a first scanner module of a LiDAR, provided in embodiments of this disclosure;
Fig. 7 shows a schematic structural diagram of a second scanner module of a LiDAR, provided in embodiments of this disclosure;
Fig. 8 shows a schematic diagram of an arrangement structure of a coaxial light path of a LiDAR, provided in embodiments of this disclosure;
Fig. 9 shows a schematic structural diagram of a light homogenizing component of a LiDAR, provided in embodiments of this disclosure;
Fig. 10 shows a schematic scanning diagram of a scanning field of view of a LiDAR, provided in embodiments of this disclosure;
Fig. 11a shows a schematic diagram of an arrangement structure of an emitter module and a receiver module of a LiDAR, provided in embodiments of this disclosure;
Fig. 11b shows an oblique front view of the arrangement structure of the emitter module and the receiver module of the LiDAR in Fig. 11a;
Fig. 11c shows an oblique back view of the arrangement structure of the emitter module and the receiver module of the LiDAR in Fig. 11a;
Fig. 12 shows a schematic diagram of another arrangement structure of an emitter module and a receiver module of a LiDAR, provided in embodiments of this disclosure;
Fig. 13 shows a schematic diagram of an arrangement position of a mounter unit and a lens barrel of a LiDAR, provided in embodiments of this disclosure;
Fig. 14 shows a schematic diagram of another arrangement position of a mounter unit and a lens barrel of a LiDAR, provided in embodiments of this disclosure;
Fig. 15a shows a schematic structural diagram of a partial structure of a LiDAR, provided in embodiments of this disclosure;
Fig. 15b shows a perspective view of a lens barrel of the LiDAR in Fig. 15a;
Fig. 15c shows a schematic structural diagram of an optomechanics module of the LiDAR in Fig. 15a;
Fig. 15d shows a bottom view of the LiDAR in Fig. 15a;
Fig. 16 shows a schematic diagram of a lens barrel structure of optical components of a LiDAR, provided in embodiments of this disclosure;
Fig. 17 shows a schematic diagram of a partial structure of a LiDAR, provided in embodiments of this disclosure; and
Fig. 18 shows a schematic diagram of another partial structure of a LiDAR, provided in embodiments of this disclosure.

| | | | |
|---|---|---|---|
| 1 | scanner module | 11 | first scanner module |
| 2 | emitter module | 21 | laser |
| 3 | receiver module | 31 | detector |
| 22 | emitter board | 32 | receiver board |
| 4 | optomechanics module | 41 | lens barrel |
| 6 | lens barrel structure of optical components | 42 | mounter unit |
| 5 | optics device | 12 | second scanner module |
| 111 | first scanning mirror | 112 | first driver device |
| 1121 | magnetic component | 1122 | fixing component |
| 121 | second scanning mirror | 122 | second driver device |
| 51 | receiving deflecting mirror | 52 | light filter |
| 53 | light homogenizing component | 54 | collimator unit |
| 541 | fast-axis collimating lens | 542 | slow-axis collimating lens |
| 55 | positive lens | 56 | wave plate |
| 57 | first negative lens | 58 | second negative lens |
| 59 | beam splitter unit | 70 | top plate |
| 8 | control circuit board | 9 | housing |
| 10 | window | 00 | emitter module fixing portion |
| 01 | receiver module fixing portion | 113 | torsion beam |
| 114 | separation layer | 71 | bottom plate |
| 530 | cylindrical lens unit | | |

### DESCRIPTION OF EMBODIMENTS

It can be seen from the background that the LiDAR which is high and has a low integration level cannot meet the mounting conditions for the vehicle body and is not configured to be compatible with and integrate with the vehicle body.

To reduce the height of the LiDAR for miniaturizing the structure of the LiDAR, facilitating the assembly and production of the LiDAR, meeting the requirements for the mounting environment in the vehicle body, and making it easy to be compatible with and integrate with the vehicle body, embodiments of this disclosure provide a LiDAR, including: an emitter module configured to emit a detection laser beam; a receiver module configured to receive an echo laser beam of the detection laser beam reflected by a target object; a scanner module configured to scan the detection laser beam and the echo laser beam; and an optomechanics module having a preset height and configured to mount an optics device of the LiDAR. The emitter module and the receiver module are arranged on two sides of the optomechanics module, respectively. The emitter module, the receiver module, and the scanner module are arranged within the preset height of the optomechanics module.

In this way, in the LiDAR provided in the embodiments of this disclosure, the emitter module, the receiver module, and the scanner module are arranged within the preset height of the optomechanics module, thereby reducing the height of the overall structure of the LiDAR. It can be seen that in the LiDAR provided in the embodiments of this disclosure, the emitter module and the receiver module are arranged on two sides of the optomechanics module, respectively, and the emitter module, the receiver module, and the scanner module are all arranged within the preset height of the optomechanics module, so that the height of the overall structure of the LiDAR can be reduced, thereby miniaturizing the LiDAR in structure, facilitating the assembly and production of the LiDAR, meeting the requirements for a mounting environment in a vehicle body, and making it easy to be compatible with and integrate with the vehicle body.

The technical solutions in the embodiments of this disclosure will be clearly and comprehensively described below with reference to the accompanying drawings in the embodiments of this disclosure. Apparently, the described embodiments are merely some rather than all of the embodiments of this disclosure. All other embodiments obtained by those of ordinary skill in the art based on the embodiments in this disclosure without creative efforts shall fall within the scope of protection of this disclosure.

It is to be noted that the indicated orientations or positional relationships involved in this specification are based on the orientations or positional relationships shown in the accompanying drawings, merely for convenience and simplification of description, rather than indicating or implying that the apparatus referred to must have a particular orientation or be constructed in a particular orientation, and accordingly cannot be understood as limitations to this disclosure.

To enable the overall size of the LiDAR to meet the requirements of practical application scenarios such as integration into vehicles, embodiments of this disclosure provide a LiDAR, to reduce the height of the LiDAR.

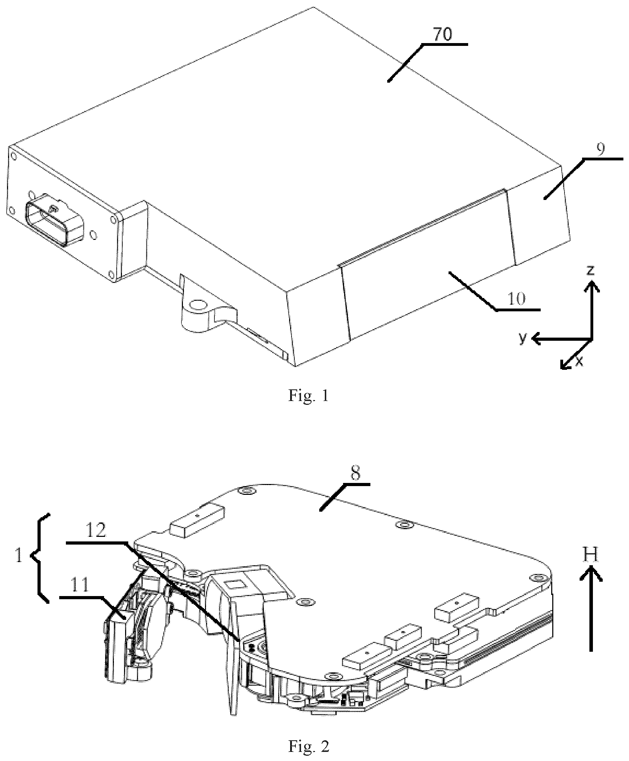

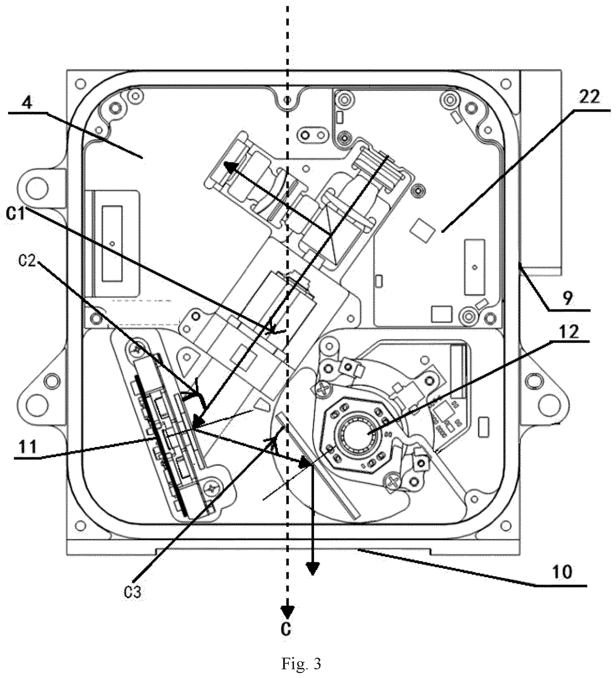

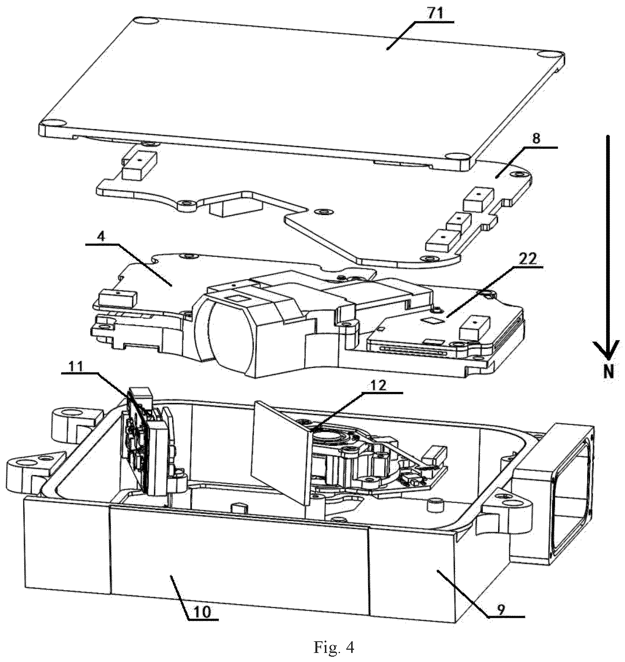

Specifically, reference is made to Fig. 1 to Fig. 4. Fig. 1 shows a schematic diagram of an external structure of a LiDAR, provided in embodiments of this disclosure. Fig. 2 shows a schematic diagram of an internal structure of a LiDAR, provided in embodiments of this disclosure. Fig. 3 shows a top view of an internal structure of a LiDAR, provided in embodiments of this disclosure. Fig. 4 shows a schematic diagram of an exploded structure of a LiDAR, provided in embodiments of this disclosure.

As shown in the figure, a LiDAR provided in embodiments of this disclosure includes:
an emitter module 2 configured to emit a detection laser beam;
a receiver module 3 configured to receive an echo laser beam of the detection laser beam reflected by a target object;
a scanner module 1 configured to scan the detection laser beam and the echo laser beam; and
an optomechanics module 4 having a preset height and configured to mount an optics device 5 of the LiDAR.

The emitter module 2 and the receiver module 3 are arranged on two sides of the optomechanics module 4, respectively.

The emitter module 2, the receiver module 3, and the scanner module 1 are arranged within the preset height of the optomechanics module 4.

A height direction of the LiDAR is a direction indicated by an arrow H as shown in Fig. 2.

It is to be noted that a coordinate direction (x, y, z) shown in Fig. 1 is a positive direction of the overall structure of the LiDAR, that is, a standard placement of the LiDAR after final assembly is an arrangement shown in Fig. 1.

The emitter module 2 and the receiver module 3 are mounted on the optomechanics module 4 and are arranged on the two sides of the optomechanics module 4, respectively.

Based on a mounting method for the emitter module 2 and the receiver module 3 in the LiDAR provided in the embodiments of this disclosure, the final integrated structure of the LiDAR can refer to Fig. 2 and Fig. 4. In this way, the emitter module 2 and the receiver module 3 are arranged on the optomechanics module 4 in a direction perpendicular to the height direction H of the LiDAR, and the emitter module 2, the receiver module 3, and the scanner module 1 are arranged within the preset height of the optomechanics module 4, so that the emitter module 2, the receiver module 3, and the scanner module 1 do not increase the size of the LiDAR in the height direction, thereby reducing the height of the LiDAR.

The emitter module 2 includes lasers 21 and an emitter board 22. The lasers 21 are fixed to the emitter board 22. There are a large number of lasers 21. When the LiDAR emits detection laser beams, the multiple lasers 21 can be divided into multiple groups, and each group of lasers 21 emits detection laser beams in a time-dividing manner. Typically, there can be six lasers 21, with three lasers 21 in one group. First, one group of lasers emits detection laser beams, and then another group of lasers emits the detection laser beams, thereby achieving emission of the detection laser beams from each group of lasers in a time-dividing manner.

The laser 21 can be an edge emitting laser ("EEL") or a vertical-cavity surface-emitting laser ("VCSEL".).

The detection laser beams emitted from the multiple groups of lasers 21 in a time-dividing manner are detected by corresponding detector groups in a time-dividing manner, respectively, to reduce the mutual interference between the detector groups and increase the coverage rate of detection. In addition, when the LiDAR emits the detection laser beams, the multiple lasers 21 can also emit the detection laser beams simultaneously, and the lasers 21 can no longer be grouped. A control circuit board 8 (shown in Fig. 2) where the lasers 21 are located employs single-sided component arrangement, that is, electronic components are arranged on one surface of the control circuit board, and copper is exposed on the other surface of the control circuit board 8. For the convenience of mounting, the copper-exposed surface of the control circuit board 8 can be directly attached to a metal back plate. The metal back plate is clamped by a fixture to achieve a three-dimensional mounting range, and then the metal back plate is fixed to the optomechanics module 4. Alternatively, in another embodiment, the control circuit board 8 can be directly fixed to the optomechanics module 4. In this way, the flatness among the multiple lasers 21 can be ensured, and a heat dissipation path of the lasers 21 can be optimized to ensure that the lasers 21 can work within a reasonable temperature range.

The detector group can be a detector linear array with multiple detectors 31 arranged along a direction, or a detector planar array with multiple detectors 31 arranged along two mutually perpendicular directions on a plane.

The receiver module 3 includes a detector 31 and a receiver board 32. The detector 31 is fixed to the receiver board 32 and can receive the reflected echo laser beam. In an embodiment, the detector 31 can be a single photon detector, such as a silicon photomultiplier ("SiPM") or a single photon avalanche diode ("SPAD").

In some embodiments, the receiver module 3 can include two detector groups. Each detector group includes multiple detectors 31. The detectors 31 at different positions in the detector group simultaneously receive signals, so that the multiple detection laser beams along the second direction B emitted from the lasers 21 in the laser group can be detected when the laser group emits laser once.

Fig. 4 shows an inverted placement of the LiDAR in Fig. 1. That is, Fig. 4 shows a structure of the LiDAR when placed upside down. To facilitate the description of an internal structural arrangement of the LiDAR, the exploded structure shown in Fig. 4 is selected to introduce the complete structure of the LiDAR in the embodiments of this disclosure.

Reference number 70 in Fig. 1 denotes a top plate of the LiDAR, and oppositely reference number 71 in Fig. 4 denotes a bottom plate of the LiDAR.

As shown in Fig. 1, it can be seen that for the LiDAR provided in the embodiments of this disclosure, due to the flat design of the internal structure and the compact mounting of various functional components, the height of the assembled LiDAR is sufficiently low, the overall structure is miniaturized, the mounting requirements of the vehicle body can be met, and the compatibility and integration with the vehicle body are achieved.

For the flat design, specifically, the emitter module 2 and the receiver module 3 are arranged on two sides of the optomechanics module 4 , respectively; and the emitter module 2, the receiver module 3, and the scanner module 1 are arranged within the preset height of the optomechanics module 4, so that the size of the LiDAR in the height direction is smaller than the size thereof in width and length directions. For example, the size of an existing scanning LiDAR in the height direction is at least 50 mm. The size of the LiDAR in the height direction in this disclosure is reduced by about 50% compared with the size of the existing scanning LiDAR in the height direction, making the overall size of the LiDAR close to two-dimensional. Moreover, the LiDAR in this disclosure uses two scanner modules 1 for scanning, where the two scanner modules 1 are arranged in the plane perpendicular to the height direction of the LiDAR. Extension directions of the emitter module 2 and the receiver module 3, and an arrangement direction of optics devices 5 in a coaxial light path are perpendicular to the height direction of the LiDAR. Each optics device 5 is arranged in the optomechanics module 4. The emitter module 2 and the receiver module 3 are arranged on different sides of the optomechanics module 4. A light homogenizing component 53 arranged close to one end of the emitter module 2 is configured to change a shape of a light spot formed by the detection laser beam. The detection laser beam after change of the shape of the light spot cooperates with the two scanner modules 1 to scan and cover a detection field of view.

As shown in Fig. 2, the scanner module 1 includes a first scanner module 11 and a second scanner module 12 that are mounted inside the LiDAR, where the scanner module 1 determines the height of the LiDAR, and other components of the LiDAR, such as the optics device 5 and the optomechanics module for mounting the optics device 5, are limited by product performance requirements and do not have many design changes in size, so that it is needed to reduce the height of the scanner module 1 to the height of the optics device 5 and the optomechanics module as much as possible, thereby reducing the overall height of the LiDAR. In the LiDAR provided in the embodiments of this disclosure, a ratio of the height of the scanner module 1 to the height of the LiDAR is set to be greater than or equal to 0.72, that is, the height of the scanner module 1 is approximately equal to the height of the LiDAR. In this way, when the height of the scanner module 1 is set to be small, it can be ensured that the overall height of the LiDAR is small, thereby reducing the height of the LiDAR. Moreover, the first scanner module 11 and the second scanner module 12 are arranged in the plane perpendicular to the height direction (the direction indicated by the arrow H) of the LiDAR, which also helps to reduce the height of the LiDAR.

Based on the above setting of the LiDAR, for light path propagation achieved, reference can be made to Fig. 3. When the LiDAR works, the detection laser beam emitted is scanned by the first scanner module 11 and reflected to the second scanner module 12. The second scanner module 12 scans the detection laser beam and reflects it to a window 10. The detection laser beam is emitted from the window 10 to the outside of the LiDAR for detecting a surrounding object. When the surrounding object is detected, the reflected echo laser beam reaches the window 10 and then sequentially passes through the second scanner module 12 and the first scanner module 11, and the received echo laser beam is reflected to the receiver module 3 of the LiDAR for subsequent processing.

For specific mounting of various structures, reference can be made to Fig. 4. As shown in the figure, after the scanner module 1 (i.e., the first scanner module 11 and the second scanner module 12) is arranged close to a light-emitting side of a housing 9 of the LiDAR and the window 10, various other functional modules of the LiDAR provided in the embodiments of this disclosure are sequentially mounted in the direction of the arrow N as shown in the figure. In this way, the overall height of the LiDAR can be reduced while there can be sufficient spaces inside the LiDAR for mounting the optomechanics module 4 and various functional components thereon.

In combination with structural arrangements of the LiDAR shown in Fig. 4 and Fig. 3, it can be seen that the scanner module 1 occupying a small space in the LiDAR is placed close to the light-emitting side of the housing 9 of the LiDAR and the window 10, and the optomechanics module 4 occupying a large space and the various functional components thereon are placed in a middle of the LiDAR, so that an arrangement angle of the scanner module 1 occupying the small space can be changed and matches with an arrangement angle of the optomechanics module 4 occupying the large space to achieve minimum envelope assembly of all functional modules.

Alternatively, in other embodiments, the ratio of the height of the scanner module 1 to the height of the LiDAR can also be set to be greater than or equal to 0.8 and less than or equal to 0.95. The overall height of the LiDAR is changed based on the specific height of the scanner module 1 to achieve miniaturization of the LiDAR as a whole.

In this way, for the LiDAR provided in the embodiments of this disclosure, the height of the scanner module 1 is set to be close to the height of the LiDAR, so that the height of the scanner module 1 mounted inside the LiDAR is reduced, thereby reducing the height of the overall structure of the LiDAR. It can be seen that in the LiDAR provided in the embodiments of this disclosure, the height of the scanner module 1 is made close to that of the LiDAR by reducing the height of the scanner module 1, so that the height of the overall structure of the LiDAR can be reduced, thereby miniaturizing the LiDAR in structure, facilitating the assembly and production of the LiDAR, meeting the requirements for the mounting environment in the vehicle body, and making it easy to be compatible with and integrate with the vehicle body.

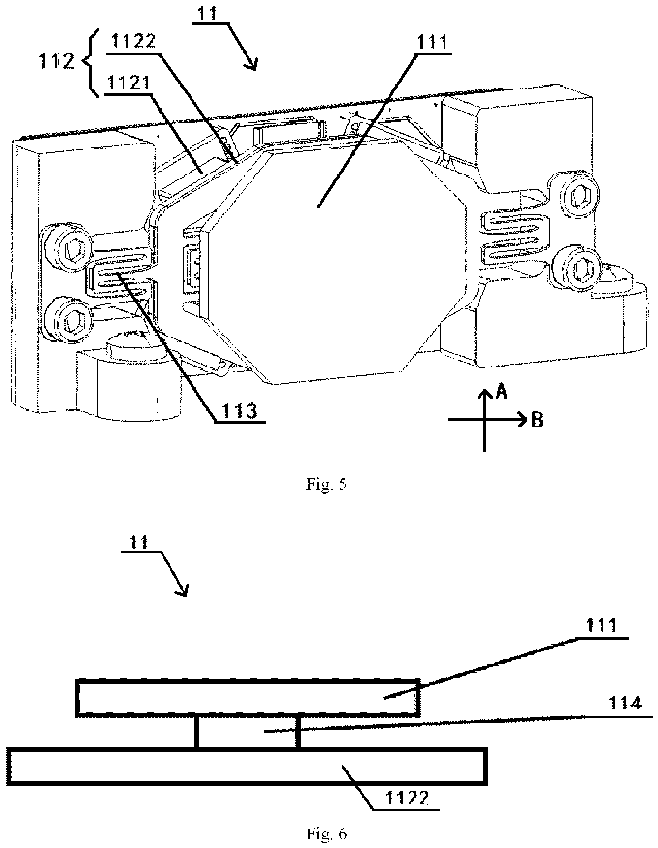

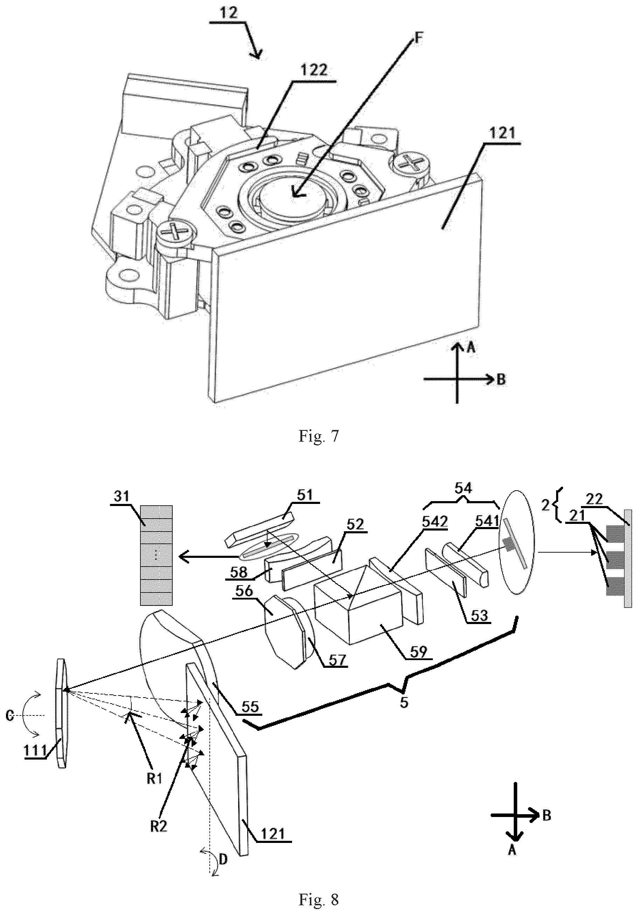

As mentioned previously, to reduce the height of the LiDAR, in an embodiment, for the scanner module 1 of the LiDAR provided in the embodiments of this disclosure, two one-dimensional scanner modules 1 (i.e., the first scanner module 11 and the second scanner module 12) are used to replace one two-dimensional scanner module 1. Specifically, in the LiDAR with the two-dimensional scanner module 1, the optomechanics module and the two-dimensional scanner module 1 are typically arranged along the height direction of the LiDAR (i.e., the two are arranged one above the other in the height direction of the LiDAR), and the first scanner module 11 and the second scanner module 12 are arranged in the plane perpendicular to the height direction of the LiDAR, which helps to reduce the height of the LiDAR. Specifically, reference is made to Fig. 5 to Fig. 8. Fig. 5 shows a schematic structural diagram of a first scanner module of a LiDAR, provided in embodiments of this disclosure. Fig. 6 shows another schematic structural diagram of a first scanner module of a LiDAR, provided in embodiments of this disclosure. Fig. 7 shows a schematic structural diagram of a second scanner module of a LiDAR, provided in embodiments of this disclosure. Fig. 8 shows a schematic diagram of an arrangement structure of a coaxial light path of a LiDAR, provided in embodiments of this disclosure.

As shown in the figure, the scanner module 1 can include: a first scanner module 11 configured to scan the laser beam in a first direction; and a second scanner module 12 configured to scan the laser beam in a second direction perpendicular to the first direction.

For the convenience of understanding the aforementioned first direction and second direction, they are marked in Fig. 8, where the first direction is a vertical direction where an arrow A as shown in Fig. 8 is located (i.e., the height direction H of the LiDAR shown in Fig. 2), the second direction is a horizontal direction indicated by an arrow B as shown in Fig. 8, and the first direction and the second direction are perpendicular to each other, that is, the first scanner module 11 and the second scanner module 12 scan laser beams in their corresponding one-dimensional directions , respectively.

Alternatively, in other embodiments, the first direction can be a horizontal direction, and the second direction can be a vertical direction.

In some embodiments, the first scanner module 11 can be a galvanometer mirror module, and the second scanner module 12 can be a swing mirror module.

Alternatively, in other embodiments, based on the actual internal arrangement structure of the LiDAR, at least one of the first scanner module 11 or the second scanner module 12 can also be another scanner module, such as a multi-facet rotating mirror module, a galvanometer mirror module, or a MEMS module.

In this way, the scanner module 1 scans the laser beam in the first direction and the second direction by the first scanner module 11 and the second scanner module 12 that perform one-dimensional scanning , respectively, so that the emitted detection laser beam can be expanded in the first direction and the second direction to form a scanning field of view of the LiDAR.

To ensure that the LiDAR will not be too high, in an embodiment, a ratio of a height of the first scanner module 11 to a height of the LiDAR is greater than or equal to 0.72.

The height of the first scanner module 11 is set to be less than the height of the LiDAR, so that when the assembly of the LiDAR is completed, it can be ensured that the LiDAR will not be too high, thereby meeting the usage requirements of the LiDAR.

Alternatively, to enable the first scanner module 11 to be lower than the LiDAR, in some embodiments, the height of the first scanner module 11 can be designed to be minimized. Reference continues to be made to Fig. 5.

As shown in the figure, the first scanner module 11 can include:
a first scanning mirror 111; and
a first driver device 112, where a ratio of a height of the first scanning mirror 111 to a height of the first driver device 112 is 1.

The first scanning mirror 111 can be a galvanometer mirror and achieves scanning of the laser beam in the height direction of the LiDAR. The first driver device 112 supports the first scanning mirror 111 and provides a driving force for reciprocation of the first scanning mirror 111 to achieve scanning of the laser beam in the first direction A.

The first scanning mirror 111 and the first driver device 112 are set to have the same height. During actual design, it is only needed to ensure that the height of one of the structures is minimized, and the height of the other structure will also be minimized, thereby achieving minimization of the height of the first scanner module 11.

To enable the first scanner module 11 to work reliably to achieve scanning of the laser beam in the first direction A, in an embodiment, the first driver device 112 includes:
a magnetic component 1121; and
a fixing component 1122 that includes a torsion beam 113 configured to fix the first scanning mirror 111, where the torsion beam 113 has an extension direction parallel to the second direction B and can drive the first scanning mirror 111 to reciprocate with the torsion beam 113 as an axis,
and the magnetic component 1121 and the first scanning mirror 111 are arranged on two sides of the fixing component 1122 , respectively.

"The first scanning mirror 111 reciprocates with the torsion beam 113 as an axis" can be that under the action of a Lorentz force formed between the magnetic component 1121 and an energized coil in the fixing component 1122, the first scanning mirror 111 is driven to vibrate forwards and backwards with the torsion beam 113 as the axis to achieve scanning of the laser beam in the first direction.

For the specific structure, reference continues to be made to Fig. 5. The fixing component 1122 includes a torsion beam 113 and a frame structure (the frame structure is a structure for fixing the first scanning mirror 111). To reduce the overall height of the first scanning mirror 111 and achieve scanning of the laser beam in the first direction, the size of the first scanning mirror 111 in the first direction A is set to be close to and not greater than the size of the frame structure, and then the first scanning mirror 111 is fixed to the frame structure. The magnetic component 1121 and the first scanning mirror 111 are located on two sides of the frame structure 114 , respectively, so that the height of the first scanning mirror 111 in the first direction is reduced.

Further, as shown in Fig. 6, the schematic structural diagram shown in Fig. 6 is a schematic sectional view of the first scanner module 11. It can be seen that in this schematic sectional view, a bottom structure of the first scanner module 11 is the fixing component 1122, a middle structure is a separation layer 114, and an uppermost structure is the first scanning mirror 111.

To increase the mirror surface size of the first scanning mirror 111, the mirror surface size of the first scanning mirror 111 in the second direction is increased, so that it can be ensured that the multiple detection laser beams emitted along the second direction can be reflected by the first scanning mirror 111, and the first scanning mirror 111 can be enabled to achieve scanning of the laser beam in the first direction, thereby ensuring a scanning field-of-view angle of the LiDAR in the first direction. Accordingly, the first scanning mirror 111 and the fixing component 1122 are separated by the separation layer 114 and are fixed, so that a gap space is formed between the first scanning mirror 111 and the fixing component 1122, thereby helping to increase the mirror surface size of the first scanning mirror 111, and providing a margin space for the vibration of the first scanning mirror 111.

The first driver device 112 can generate a magnetic field by the magnetic component 1121. When the LiDAR is powered on and starts to work, a current passes through the coil in the frame structure to generate a magnetic field, which interacts with the magnetic field of the magnetic component 1121 to generate the Lorentz force. The first scanning mirror 111 is driven by the Lorentz force to periodically vibrate with the torsion beam 113 as the axis. Finally, scanning of the detection laser beam emitted from the LiDAR in the first direction is completed. The torsion beam 113 can be a straight beam , a serpentine beam, or a folded beam (as shown in Fig. 5).

After ensuring that the height of the first scanner module 11 is minimized, to minimize the height of the assembled LiDAR, in an embodiment, the height of the second scanner module 12 can be set. Reference continues to be made to Fig. 7.

As shown in the figure, a ratio of a height of the second scanner module 12 to a height of the LiDAR is greater than or equal to 0.8.

The overall height of the second scanner module 12 is also set to be close to the height of the LiDAR, so that the height of the assembled LiDAR can meet the actual requirements of the LiDAR.

The height of the second scanner module 12 is affected by the constituent structure of the second scanner module 12, so that it is needed to set the height of the constituent structure of the second scanner module 12. Specifically, reference continues to be made to Fig. 7.

As shown in the figure, the second scanner module 12 includes:
a second scanning mirror 121; and
a second driver device 122, where a ratio of a height of the second scanning mirror 121 to a height of the second driver device 122 is greater than 1.

The second scanning mirror 121 can be a swing mirror, and scans the laser beam reflected from the first scanning mirror 111 in the second direction, or scans the echo laser beam returning to the LiDAR in the second direction. The second driver device 122 provides a driving force for the second scanning mirror 121 to reciprocate with a rotating shaft (an arrow F as shown in Fig. 7) as an axis. The second driver device 122 can be a driving motor to achieve scanning of the laser beam by the second scanning mirror 121 in the second direction.

The height of the second scanner module 12 is determined by the height of the second scanning mirror 121. Accordingly, as long as it is ensured that the height of the second scanning mirror 121 is minimized, the height of the second scanner module 12 will be minimized.

In some embodiments, the second driver device 122 can be a driving motor, such as a resonant voice coil motor. When the second scanner module 12 scans the detection laser beam or the echo laser beam, the second driver device 122 drives the second scanning mirror 121 to reciprocate with the rotating shaft F as the axis. In such a driving mode, a motion region of the second scanning mirror 121 only needs to be set based on the actual scanning field-of-view angle of the LiDAR in the second direction, and the second scanning mirror 121 does not scan at other angles outside the scanning field-of-view angle in the second direction. Moreover, the second scanner module 12 achieves scanning of the laser beam in the second direction. Accordingly, as long as it is ensured that the second scanner module 12 can fully receive and reflect the laser beam from the first scanner module 11, and the scanning field-of-view angle of the LiDAR in the second direction is ensured, the height in the first direction is less restricted, thereby compressing the height of the LiDAR.

To achieve expansion of the field of view, in an embodiment, with an initial position of the first scanning mirror 111 of the first scanner module 11 as a center, the first scanning mirror 111 reciprocates at an angle ranging from 4° to 8° (e.g., vibrates forward and backward in a direction C in Fig. 8). That is, with the initial position as the center, the first scanning mirror 111 vibrates forward and backward at an angle ranging from 4° to 8°. The first scanning mirror can scan the laser beam directed onto the first scanning mirror 111 in the first direction. Specifically, the angle at which the first scanning mirror 111 reciprocates to scan the laser beam in the first direction is shown by an angle R1 marked in Fig. 8.

In this way, laser beam scanning in the first direction can be implemented by the first scanner module 11, thereby forming a scanning field of view in the first direction.

Alternatively, a scanning angle of the second scanner module 12 also needs to ensure that the second scanner module 12 can implement laser beam scanning in the second direction B.

Specifically, with an initial position of the second scanning mirror 121 of the second scanner module 12 as a center, the second scanning mirror 121 reciprocates at an angle ranging from 15° to 30° (e.g., swings left and right in a direction D). That is, with the initial position as the center, the second scanning mirror 121 swings left and right at an angle ranging from 15° to 30°. The second scanning mirror can scan the laser beam directed onto the second scanning mirror 121 in the second direction. Specifically, the angle at which the second scanning mirror 121 reciprocates to scan the laser beam in the second direction is shown by an angle R2 marked in Fig. 8.

In this way, when the LiDAR emits the detection laser beam, the detection laser beam is emitted from the optomechanics module 4 to the first scanner module 11. The first scanner module 11 scans the detection laser beam in the first direction A, and then emits the scanned detection laser beam to the second scanner module 12. The second scanner module 12 continues to scan the detection laser beam in the second direction B. Accordingly, scanning of the laser beam in the second direction is achieved by the second scanner module 12, thereby forming a scanning field of view in the second direction. In combination with scanning of the laser beam by the first scanner module 11 in the first direction A, a scanning field of view of the LiDAR is achieved.

Alternatively, to rationalize the mounting of the various components inside the LiDAR and improve the integration level of the LiDAR, in an embodiment, the first scanner module 11 and the second scanner module 12 can be mounted on one side close to the window 10 of the LiDAR, as shown in Fig. 3. In this way, the size of the first scanner module 11 and the second scanner module 12 inside the LiDAR can be reduced.

To provide sufficient scanning fields of view and form the entire scanning field of view of the LiDAR without stitching the scanning fields of view, in an embodiment, in the LiDAR provided in the embodiments of this disclosure, a scanning direction of the first scanner module 11 is a fast-axis direction of the scanner module 1 when scanning, and a scanning direction of the second scanner module 12 is a slow-axis direction of the scanner module 1 when scanning.

Such an arrangement can make the scanning range of the scanner module 1 better meet the requirements of the scanning field-of-view angle.

Specifically, a scanning direction of the first scanner module 11, that is, the first direction A, is a fast-axis direction of the scanner module 1 when scanning, and a scanning direction of the second scanner module 12, that is, the second direction B, is a slow-axis direction of the scanner module 1 when scanning.

The first direction A is a direction indicated by the arrow A as shown in Fig. 8, that is, the height direction (the vertical direction) of the LiDAR. The second direction B is a direction indicated by the arrow B as shown in Fig. 8, that is, the direction (the horizontal direction) perpendicular to the height of the LiDAR.

As shown in the figure, it can be seen that the LiDAR provided in the embodiments of this disclosure uses the scanner module 1 which combines two one-dimensional scanner modules, and the scanning mirror surface of the second scanner module 12 is large enough, so that an angle at which the second scanner module 12 can swing in the second direction B can meet the requirements of the field of view. To reduce the overall height of the LiDAR, the overall structure of the first scanner module 11 is relatively low, and the scanning range in the first direction A is narrower than the scanning range in the second direction B. The first direction A is set as the fast-axis direction, the second direction B is set as the slow-axis direction, the first direction A corresponds to the direction of a small field of view and the second direction B corresponds to the direction of a large field of view, so that the height of the LiDAR can be reduced, and the field of view of the LiDAR can be extended.

A scanning speed of the first scanner module 11 and a scanning speed of the second scanner module 12 can be specifically set based on the first driver device 112 and the second driver device 122. Based on the actual requirements, in some embodiments, the driving scanning speed of the first driver device 112 along the first direction A can be set to be greater than the driving scanning speed of the second driver device 122 along the second direction B.

In this way, while it is ensured that the overall height of the LiDAR is reduced, due to the combination of both the first scanner module 11 in the first direction A and the second scanner module 12 in the second direction B, the scanning field-of-view angle of the LiDAR can be expanded, and the detection range of the LiDAR can be increased. In addition, it can be seen from the previous description that in some embodiments, the ratio of the height of the first scanning mirror 111 to the height of the first driver device 112 can be set to 1, so that the mirror surface size of the first scanning mirror 111 can be increased, thereby achieving the effect of expanding the scanning field-of-view angle of the LiDAR.

Similarly, the ratio of the height of the second scanning mirror 121 to the height of the second driver device 122 is set to be greater than 1, so that the mirror surface size of the second scanning mirror 121 is increased, thereby further achieving the effect of expanding the scanning field-of-view angle of the LiDAR.

To further reduce the size of the LiDAR and minimize the envelope of the housing 9 of the LiDAR, in an embodiment, relative positions of the first scanner module 11, the second scanner module 12, and the optomechanics module 4 are set. An angle C1 between an optical axis of the detection laser beam emitted from the optomechanics module 4 and a center line C of the housing 9 is changed and optimized. An arrow C as shown in Fig. 3 is the center line of the housing. Optionally, the angle C1 can be 40°. An angle C2 between the optical axis of the detection laser beam emitted from the optomechanics module 4 and the first scanning mirror 111 of the first scanner module 11, and an angle C3 between an optical axis of the laser beam reflected from the first scanning mirror 111 and the second scanning mirror 121 of the second scanner module 12 can also be changed and optimized, so that an envelope area of the plane of the LiDAR perpendicular to the height direction is minimum, that is, an envelope area of the housing 9 is minimum, and the size of the LiDAR is reduced.

Specifically, in the LiDAR provided in the embodiments of this disclosure, an angle between an optical axis of the laser beam emitted from the optomechanics module 4 and directed onto a first scanning mirror 111 of the first scanner module 11 and the first scanning mirror 111 at an initial position ranges from 50° to 60°.

In this way, on the basis of fixing an angle of the optical axis of the detection laser beam emitted from the optomechanics module 4, the envelope of the depth and width of the LiDAR can be minimized by setting the angle between the first scanner module 11 and the optical axis of the detection laser beam emitted from the optomechanics module 4.

Further, in an embodiment, an angle between an optical axis of a first scanned laser beam formed by the first scanner module 11 at an initial position and a second scanning mirror 121 of the second scanner module 12 at an initial position ranges from 30° to 40°, and an optical axis of a second scanned laser beam formed by reflecting the first scanned laser beam through the second scanning mirror 121 at the initial position is perpendicular to a window 10 of the LiDAR.

On the basis of optimizing the angle of the optical axis of the detection laser beam emitted from the optomechanics module 4 to reduce the depth and width of the LiDAR, the set angle of the second scanner module 12 is further set in combination with the set angle of the first scanner module 11, so that the envelope of the internal depth and width of the LiDAR is minimized.

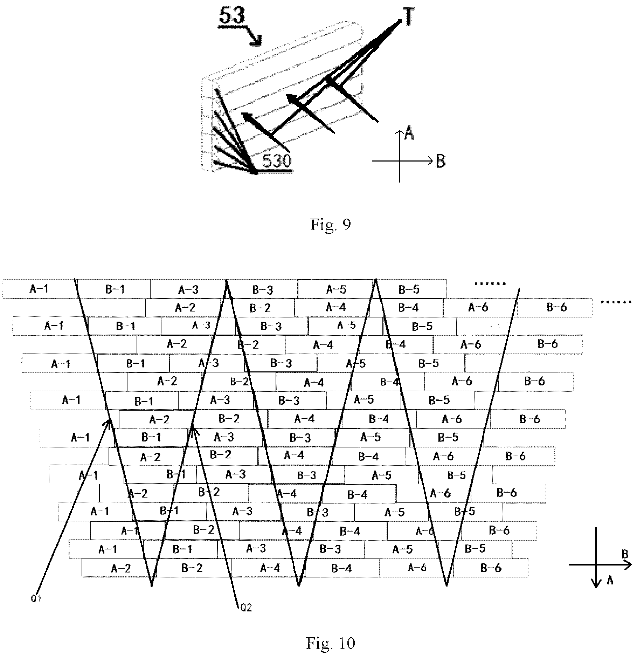

To improve the eye safety of the detection laser beam emitted from the LiDAR, reference can be made to Fig. 10. Fig. 10 shows a schematic scanning diagram of a scanning field of view of a LiDAR, provided in embodiments of this disclosure.

In the figure, A-n and B-n (n = 1, 2, 3, 4, 5...) represent light spots formed in a scanning field of view by detection laser beams simultaneously emitted from lasers 21 included in a first laser group and a second laser group of the LiDAR , respectively. The first laser group and the second laser group can emit the detection laser beams in a time-dividing manner. Specifically, the lasers 21 in the first laser group simultaneously emit the detection laser beams to form a light spot in the scanning field of view, such as A-1. Then, at a next time point, the lasers 21 in the second laser group simultaneously emit the detection laser beams to form a light spot in the scanning field of view, such as B-1. Wherein, n = 1 represents the light spots formed by the detection laser beams emitted from the first laser group and the second laser group within a first time interval T1, n = 2 represents the light spots formed by the detection laser beams emitted from the first laser group and the second laser group within a second time interval T2, and so on. The first time interval T1 and the second time interval T2 are the time corresponding to the reciprocation of the scanner module 1. The scanner module 1 reciprocates to form a zigzag scanning curve as shown in Fig. 10 (shown by a black solid line in Fig. 10). Specifically, the time corresponding to the motion of the scanner module 1 along one direction is the first time interval T1. As shown in Fig. 10, the scanner module 1 moves along one direction within the first time interval T1 to form a scanning curve Q1. Correspondingly, the light spots A-1 and B-1 are sequentially formed along the scanning curve Q1 at different time points within the first time interval T1. Similarly, the time corresponding to the motion of the scanner module 1 along an opposite direction of the one direction is the second time interval T2. As shown in Fig. 10, the scanner module 1 moves along the opposite direction of the one direction within the second time interval T2 to form a scanning curve Q2. Correspondingly, the light spots A-2 and B-2 are sequentially formed along the scanning curve Q2 at different time points within the second time interval T2. By parity of reasoning, the light spots A-n and B-n (n = 3, 4, 5...) are sequentially formed, thereby forming the scanning field of view of the LiDAR. Moreover, the light spots A-1 and B-1 sequentially formed along the scanning curve Q1 at different time points within the first time interval T1 can be interleaved and separated from the light spots A-2 and B-2 sequentially formed along the scanning curve Q2 at different time points within the second time interval T2 in the scanning field of view. For example, the light spots A-1 and B-1 sequentially formed along the scanning curve Q1 are interleaved and separated from the light spots A-2 and B-2 sequentially formed along the scanning curve Q2. Similarly, the light spots A-2 and B-2 are interleaved and separated from the light spots A-1 and B-1 and the light spots A-3 and B-3 , respectively. That is, the light spots A-n and B-n in one time interval are interleaved and separated from the light spots A-(n + 1) and B-(n + 1) in the next time interval, so that the eye safety can be ensured.

The optics devices 5 configured to transmit the detection laser beam emitted from the emitter module 2 and the echo laser beam received by the receiver module 3 are mounted in the optomechanics module 4, so that by arranging the emitter module 2 and the receiver module 3 on the optomechanics module 4, the structure of the LiDAR can be made compact, and reliable operation of the LiDAR can be ensured.

To reduce the overall height of the LiDAR, in the embodiments of this disclosure, the optics devices 5 inside the LiDAR are arranged in the direction perpendicular to the height of the LiDAR. Moreover, to ensure that the detection laser beam emitted from the emitter module 2 and the echo laser beam received by the receiver module 3 need to be transmitted by the optics devices 5 in the optomechanics module 4, it is needed to set the emitter module 2, the receiver module 3, and the optics devices 5 in a coaxial light path. Specifically, reference continues to be made to Fig. 8. Due to the characteristics of the coaxial light path, emitting and receiving light paths (laser beam transmission paths for the detection laser beam and the echo laser beam) need to be located in a same horizontal plane. The detector 31 is arranged on the receiver board 32. If the detector 31 is completely perpendicular to an optical axis of the echo laser beam, it will be needed to place the receiver board 32 in the height direction of the LiDAR, which is not conducive to reducing the overall height of the LiDAR. Accordingly, in an embodiment, the optics device 5 includes:
a receiving deflecting mirror 51 configured to reflect the received echo laser beam through the optomechanics module 4 and vertically direct the echo laser beam onto the receiver module 3.

The receiving deflecting mirror 51 is used to deflect the echo laser beam in the receiving light path by 90°, so that the receiver board 32 is arranged in the direction perpendicular to the height of the LiDAR, the echo laser beam can be vertically directed onto the receiver module 3, and the height of the LiDAR can be reduced without affecting reliable operation of the LiDAR.

To match a light spot of the echo laser beam with the detector 31 in position and ensure the long-range detection capability of a peripheral field of view of the LiDAR, in an embodiment, a light homogenizing component can further be arranged. Specifically, reference continues to be made to Fig. 9 in combination with Fig. 8. Fig. 9 shows a schematic structural diagram of a light homogenizing component of a LiDAR, provided in embodiments of this disclosure.

As shown in the figure, the optics device 5 can further include
a light homogenizing component 53 arranged close to one end of the emitter module 2 and configured to change a shape of a light spot formed by the detection laser beam. Specifically, the shape of the light spot formed by the multiple detection laser beams T emitted from each laser group is changed.

The light homogenizing component 53 is arranged directly in front of the lasers 21 to homogenize the detection laser beams, so that the detection laser beams T simultaneously emitted from the multiple lasers 21 in each laser group form a uniform linear light spot.

It can be seen from the previous description that each laser group emits the detection laser beams in a time-dividing manner. Accordingly, the light homogenizing component 53 is arranged directly in front of the lasers 21, so that the multiple emitted detection laser beams T form the uniform linear light spot, such as the light spot A-n/B-n in Fig. 10.

In an embodiment, the light homogenizing component 53 can include a cylindrical lens array.

For the specific structure, reference can continue to be made to FIG. 9.

As shown in the figure, the cylindrical lens array includes multiple cylindrical lens units 530. By setting a curvature radius of an optical surface of the cylindrical lens unit 530 and an interval between the cylindrical lens units 530, it is possible to increase a light homogenizing angle and achieve better uniformity and low costs.

In an embodiment, the cylindrical lens units 530 are arranged in sequence along a height direction of the LiDAR, and the cylindrical lens units 530 can change the shape of the light spot formed by the detection laser beam.

The specific arrangement of the cylindrical lens units 530 is as shown in Fig. 9. The cylindrical lens units 530 are arranged in sequence along the vertical direction A. The optical surfaces of the cylindrical lens units 530 correspond to the detection laser beams T emitted from the three lasers 21 in one laser group arranged along the horizontal direction B, thereby achieving light homogenization for the multiple detection laser beams.

In this way, the detection laser beams emitted in a time-dividing manner from different laser groups of the LiDAR can be homogenized by the multiple cylindrical lens units, so that the multiple detection laser beams are changed to form the uniform light spot (e.g., the linear light spot.).

Alternatively, to reduce environmental noise received by the detector 31 and increase a signal-to-noise ratio, in an embodiment, a diaphragm can further be arranged directly in front of the detector 31 to reduce the impact of ambient light on the echo laser beam.

To reduce a divergence angle of the detection laser beam and improve the long-range detection performance of the LiDAR, in an embodiment, a collimator unit can further be added. Specifically, reference continues to be made to FIG. 8.

As shown in the figure, the optics device 5 further includes
a collimator unit 54, including:
a fast-axis collimating lens 541 arranged at an upstream part of the light homogenizing component 53 along a transmission direction of the detection laser beam and configured to change a shape of a light spot formed by the detection laser beam in a fast-axis direction; and
a slow-axis collimating lens 542 arranged at a downstream part of the light homogenizing component 53 along the transmission direction of the detection laser beam and configured to change a shape of a light spot formed by the detection laser beam in a slow-axis direction.

The fast-axis collimating lens 541 ("FAC") and the slow-axis collimating lens 542 ("SAC") can reduce the divergence angle of the detection laser beam and achieve change of the light spot of the detection laser beam from an elliptical shape to an approximately circular shape. Moreover, the use of the fast-axis collimating lens 541 ("FAC") and the slow-axis collimating lens 542 ("SAC") facilitates mounting as well as automated assembly.

Alternatively, in other embodiments, a fiber optic can also be used as a device to change the shape of the light spot formed by the detection laser beam in the fast-axis direction.

The above statement that the fast-axis collimating lens 541 is arranged at the upstream part of the light homogenizing component 53 and the slow-axis collimating lens 542 is arranged at the downstream part of the light homogenizing component 53 refers to that, as shown in Fig. 8, the light homogenizing component 53 can be arranged between the fast-axis collimating lens 541 and the slow-axis collimating lens 542. The "upstream part" is one end closer to the emitter module 2 than the light homogenizing component 53, and the "downstream part" is one end farther away from the emitter module 2 than the light homogenizing component 53.

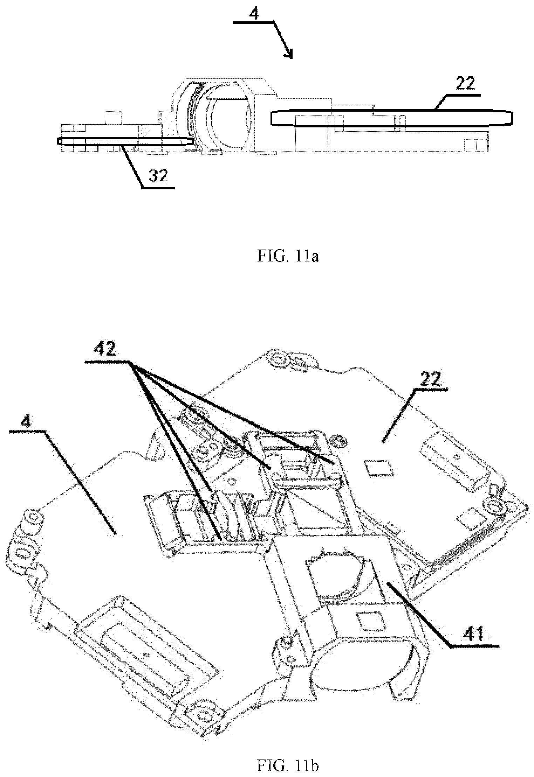

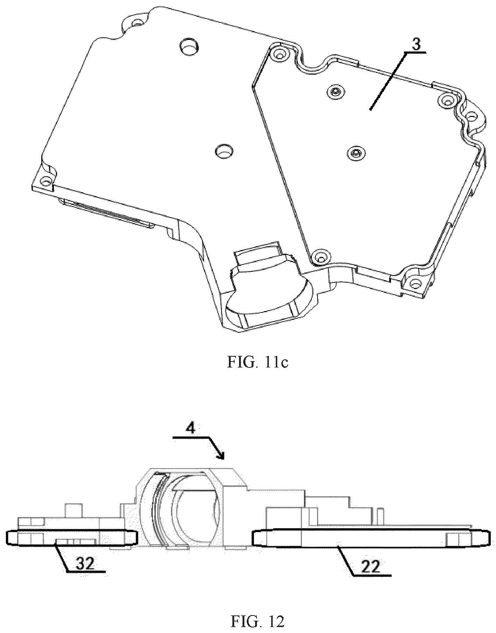

To reduce the height of the LiDAR, in an embodiment, the extension directions of both the emitter module 2 and the receiver module 3 are perpendicular to the height direction of the LiDAR (shown in Fig. 11a and Fig. 12.).

In this way, when the emitter module 2 and the receiver module 3 are fixed, space occupation of the emitter module 2 and the receiver module 3 in the vertical direction, that is, the height direction of the LiDAR, can be reduced, thereby achieving the effect of reducing the overall height of the LiDAR.

In an embodiment, in the height direction of the LiDAR, the emitter module 2 and the receiver module 3 are arranged on the two sides of the optomechanics module 4 , respectively.

In this way, based on the structure of the optomechanics module 4, the planes where the emitter module 2 and the receiver module 3 are arranged can be set parallel to a plane where the optomechanics module 4 is arranged(shown in Fig. 11a and Fig. 12.). The positions of the receiver module 3 and the emitter module 2 are reasonably arranged to reduce the height of the LiDAR.

In some other embodiments, the emitter module 2 and the receiver module 3 are obliquely and symmetrically arranged on two sides of the optomechanics module 4 , respectively.

For specific structure design, reference can be made to Fig. 11a to Fig. 11c. Fig. 11a shows a schematic diagram of an arrangement structure of an emitter module and a receiver module of a LiDAR, provided in embodiments of this disclosure. Fig. 11b shows an oblique front view of the arrangement structure of the emitter module and the receiver module of the LiDAR in Fig. 11a. Fig. 11c shows an oblique back view of the arrangement structure of the emitter module and the receiver module of the LiDAR in Fig. 11a.

As shown in the figure, the receiver module 3 and the emitter module 2 are fixed in an up-and-down staggered manner. Specifically, the emitter board 22 and the receiver board 32 are obliquely and symmetrically arranged on the two sides of the optomechanics module 4, so that a space for the emitter module 2 can be expanded to place another control circuit board (as indicated by a mark 4 in Fig. 11b), an internal layout of the LiDAR is rationalized, the integration level of the internal structure of the LiDAR is improved, and the LiDAR can be more miniaturized.

To meet the requirement of reducing the height of the LiDAR under different types of LiDARs, in another embodiment, the receiver module 3 and the emitter module 2 can be arranged on a same side of the optomechanics module 4. For specific structural design, reference can be made to Fig. 12. Fig. 12 shows a schematic diagram of another arrangement structure of an emitter module and a receiver module of a LiDAR, provided in embodiments of this disclosure.

As shown in the figure, in the height direction of the LiDAR, the emitter module 2 and the receiver module 3 are arranged on the same side of the optomechanics module 4. Specifically, the emitter board 22 and the receiver board 32 are arranged on the same side of the optomechanics module 4, such as on a lower side in Fig. 12. The optics device 5 further includes:
an emitting deflecting mirror arranged adjacent to the emitter module 2 along a height direction of the LiDAR and configured to reflect the detection laser beam through the optomechanics module 4 and vertically direct the detection laser beam onto the optics device 5 of the optomechanics module 4.

The emitting deflecting mirror is used to deflect the detection laser beam in the emitting light path by 90°, so that the detection laser beam can be vertically directed onto the optics device 5 in the optomechanics module 4, and the height of the LiDAR can be reduced without affecting reliable operation of the LiDAR.

To illustrate that reliable operation of each optics device 5 inside the LiDAR is ensured while the height of the LiDAR is reduced by arranging the emitter module 2 and the receiver module 3 on the optomechanics module 4 in the direction perpendicular to the height of the LiDAR, this disclosure makes an introduction with reference to Fig. 11a to Fig. 12 in combination with Fig. 8.

The aforementioned optics devices 5, such as the receiving deflecting mirror 51 or the emitting deflecting mirror 52, the light homogenizing component 53, and the collimator unit 54, when mounted on the optomechanics module 4, are coaxial with the emitting and receiving light paths formed by the receiver module 3 and the emitter module 2 which are arranged on the optomechanics module 4. To understand the arrangement of the optics devices 5, the receiver module 3, and the emitter module 2 in the coaxial light path in this disclosure, reference can continue to be made to Fig. 8.

As shown in the figure, the optomechanics module 4 includes the emitter module 2 (including the laser 21 and the emitter board 22), the receiver module 3 (including the detector 31 and the receiver board 32), and the optics device 5. From an optical perspective, the coaxial light path includes the laser 21 mounted on the emitter board 22, the fast-axis collimating lens 541, the light homogenizing component 53, the slow-axis collimating lens 542, and the receiving deflecting mirror 51.

Alternatively, when the receiver module 3 and the emitter module 2 are arranged on the same side of the optomechanics module 4, to ensure that the detection laser beam emitted from the emitter module 2 can be vertically directed onto the optics device 5 of the optomechanics module 4, the emitting deflecting mirror 52 can be arranged in front of the laser 21. The arrangement of the coaxial light path for other optics devices 5 is as shown in Fig. 8. To facilitate the overall processing of the LiDAR, improve the positioning accuracy of the optics devices 5, optimize the assembly operations, and take into account the reliability of the optics devices 5, in an embodiment, the optics devices 5 can be mounted by a classified assembly method separately.

Reference is made to Fig. 8 and Fig. 11b. As shown in Fig. 11b, the optomechanics module 4 includes a lens barrel 41 and a mounter unit 42, and the optics device 5 further includes:
a positive lens 55, a wave plate 56, and a first negative lens 57 that are mounted in the lens barrel 41; and
a second negative lens 58, a beam splitter unit 59, a collimator unit 54, a receiving deflecting mirror 51, and a light homogenizing component 53 that are mounted in the mounter unit 42, where the mounter unit 42 communicates with the lens barrel 41.

For the positive lens 55, the wave plate 56, the first negative lens 57, the second negative lens 58, and the beam splitter unit 59, reference can continue to be made to Fig. 8, and they are also optical components in the coaxial light path.

The positive lens 55, the wave plate 56, and the first negative lens 57 have large mirror surface areas, so that during assembly, it is needed to take into account the risk of thermal stress caused by adhesion between lens elements of the positive lens 55, the wave plate 56, and the first negative lens 57 and the lens barrel 41 for fixing the lens elements, and reduce cut edges and cut edge adhesion of the lens elements as much as possible. Accordingly, a structure for fixation by the lens barrel 41 is used to adhere arc surfaces of the lens elements. For the optics devices 5 having lens elements with small areas, such as the second negative lens 58, the beam splitter unit 59, the collimator unit 54, the receiving deflecting mirror 541, and the light homogenizing component 53, these lens elements can be fixed by the mounter unit 42 because they have small areas and are mostly not cut from circular lens elements. In this way, it can be ensured that positioning surfaces of the beam splitter unit 59 (e.g., a polarization beam splitter prism), the slow-axis collimating lens 542, the light homogenizing component 53, the fast-axis collimating lens 541, a light filter 52, and the second negative lens 58 are clamped once and are processed and formed, thereby greatly optimizing the processing process, improving the processing accuracy, reducing production costs, and ensuring the thermal adaptability of the optics devices 5 during thermal deformation of the structural component such as the optomechanics module 4 due to heat generated when the LiDAR works.

To facilitate the understanding of the light path propagation of the optics devices 5 in the coaxial light path, this disclosure continues to illustrate the coaxial light path propagation of the above optics devices 5 in combination with Fig. 3 and Fig. 8.

When the laser 21 of the LiDAR emits the detection laser beam, the detection laser beam first passes through the fast-axis collimating lens 541, then is homogenized by the light homogenizing component 53, passes through the slow-axis collimating lens 542, is emitted to the beam splitter unit 59, passes through the first negative lens 57, the wave plate 56, and the positive lens 55, and is scanned by the first scanning mirror 111 in the first direction A and reflected to the second scanning mirror 121, and the second scanning mirror 121 scans the detection laser beam in the second direction B and reflects it to the outside of the LiDAR.

When the LiDAR detects an external object, the echo laser beam is reflected. First, the second scanning mirror 121 receives the echo laser beam and reflects it to the first scanning mirror 111. After being processed by the first scanning mirror 111, the echo laser beam is reflected to the positive lens 55, the wave plate 56, and the first negative lens 57. Then, at the beam splitter unit 59, the echo laser beam is reflected to the light filter 52, the second negative lens 58, and the receiving deflecting mirror 51. After being deflected by the receiving deflecting mirror 51, the echo laser beam is vertically reflected onto the detector 31.

In an embodiment, the mounter unit 42 can include a mounting groove.

The structure of the mounting groove can facilitate one-time clamping of the positioning surfaces of the beam splitter unit 59, the slow-axis collimating lens 542, the light homogenizing component 53, the fast-axis collimating lens 541, the light filter 52, and the second negative lens 58, greatly optimize the processing process, improve the processing accuracy, and reduce production costs, and a clearance groove introduced during processing of the mounting groove can also be used as an adhesive groove for adhesion of the optics devices 5.

To improve the practicality of the lens barrel 41 and the mounter unit 42, in an embodiment, both the mounter unit 42 and the lens barrel 41 are arranged in the optomechanics module 4, or both the mounter unit 42 and the lens barrel 41 are arranged in a lens barrel structure of optical components 6. The lens barrel structure of optical components 6 is detachably mounted on the optomechanics module 4.

The lens barrel 41 and the mounter unit 42 are designed as a structure integrally formed with the optomechanics module 4 or as independent structures detachably mounted on the optomechanics module 4 relative to the optomechanics module 4, so that the appropriate lens barrel 41 and mounter unit 42 can be designed based on the actual design requirements of the LiDAR to complete assembly of the LiDAR.

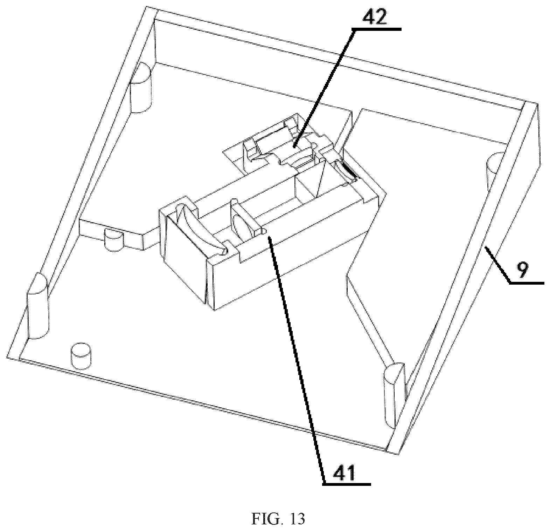

In a specific embodiment, both the mounter unit 42 and the lens barrel 41 can be located on a front surface of the optomechanics module 4. For the specific structure, reference can be made to Fig. 13. Fig. 13 shows a schematic diagram of an arrangement position of a mounter unit and a lens barrel of a LiDAR, provided in embodiments of this disclosure.

As shown in the figure, the mounter unit 42 and the lens barrel 41 are integrally formed with the optomechanics module 4 and are integrated onto the housing of the LiDAR. The optics devices 5 in the optomechanics module 4 are cut in a square shape and are placed in the integrally formed mounter unit 42 and lens barrel 41, which improves the reliability of fixing the optics devices 5 and reduces the number of the structural components (e.g., the separately processed mounting grooves 42, lens barrels 41, and optomechanics modules 4) in the LiDAR.

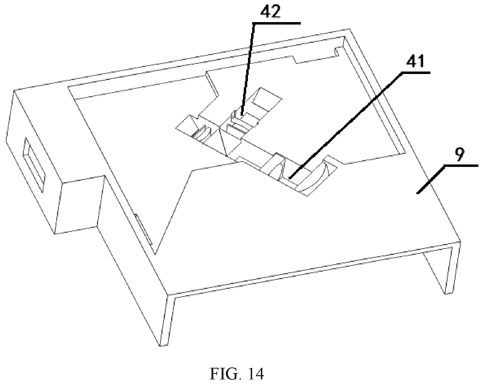

In another embodiment, both the mounter unit 42 and the lens barrel 41 can also be located on a back surface of the optomechanics module 4. For the specific structure, reference can be made to Fig. 14. Fig. 14 shows a schematic diagram of another arrangement position of a mounting groove and a lens barrel of a LiDAR, provided in embodiments of this disclosure.

Such a design structure optimizes the internal space layout of the LiDAR. The mounting positions of the optics devices 5, the emitter board 22, and the receiver board 32 are processed and arranged on the back surface of the housing of the LiDAR. In this way, the utilization of the internal space of the LiDAR can be improved.

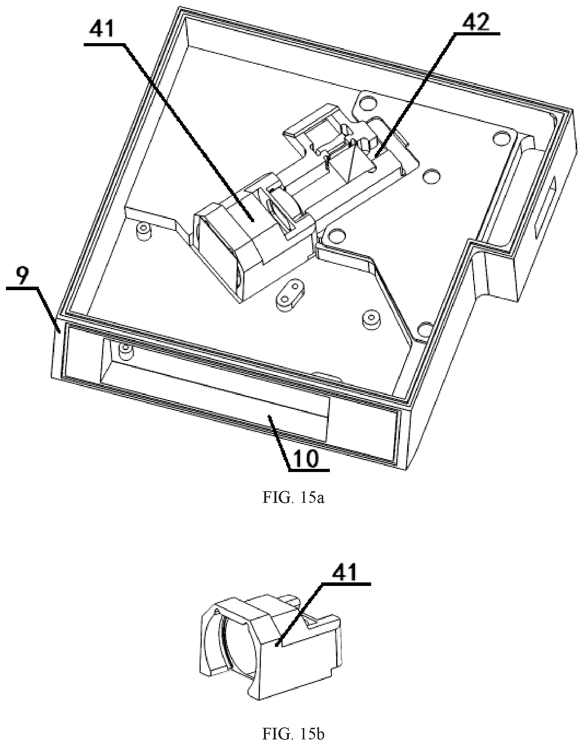

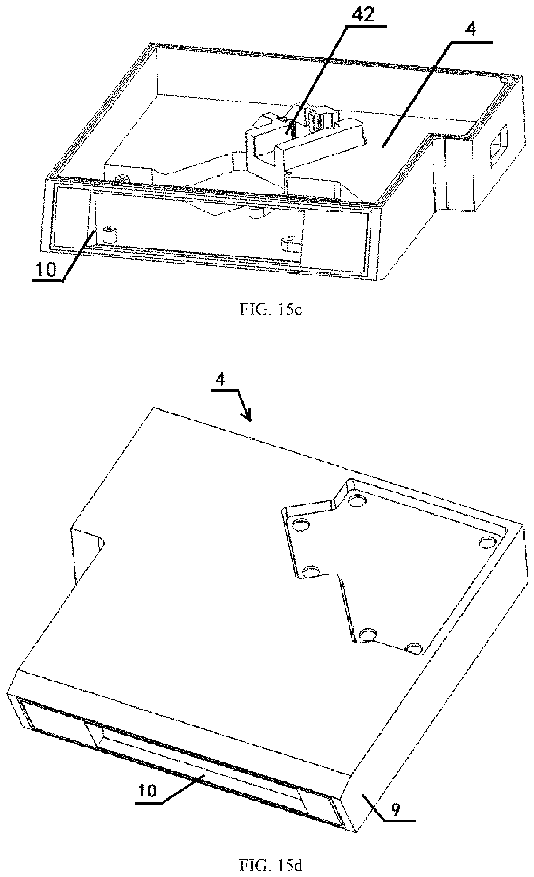

When the reliability of the optics devices 5 is taken into account, in an embodiment, the positive lens 55, the wave plate 56, and the first negative lens 57 can be assembled as independent small modules. Specifically, reference is made to Fig. 15a to Fig. 15d. Fig. 15a shows a schematic structural diagram of a partial structure of a LiDAR, provided in embodiments of this disclosure. Fig. 15b shows a perspective view of a lens barrel of a lens group of the LiDAR in Fig. 15a. Fig. 15c shows a schematic structural diagram of an optomechanics module of the LiDAR in Fig. 15a. Fig. 15d shows a bottom view of the LiDAR in Fig. 15a.

As shown in the figure, the mounter unit 42 is arranged in the optomechanics module 4, and the lens barrel 41 is detachably mounted in the optomechanics module 4.

In such a design, the optics devices 5 (e.g., the beam splitter unit 59, the slow-axis collimating lens 542, the light homogenizing component 53, the fast-axis collimating lens 541, the light filter 52, the second negative lens 58, and the receiving deflecting mirror 51) that form the coaxial light path are placed in the mounter unit 42 of the optomechanics module 4, and there are relatively low requirements for the positioning accuracy of the subsequent optics devices 5 (e.g., the positive lens 55, the wave plate 56, and the first negative lens 57), so that the optomechanics module can be disassembled into the independent lens barrels 41 for assembly to give priority to ensuring the reliability of the optics devices 5. In addition, the positioning accuracy of the receiver board 32 is lower than the positioning accuracy of the emitter board 22, so that the receiver board 32 can be arranged on one surface opposite to the emitter board 22, and the emitter board 22 and the receiver board 32 are obliquely and symmetrically arranged on the two sides of the optomechanics module 4 , respectively, thereby improving the utilization of the internal space of the LiDAR.

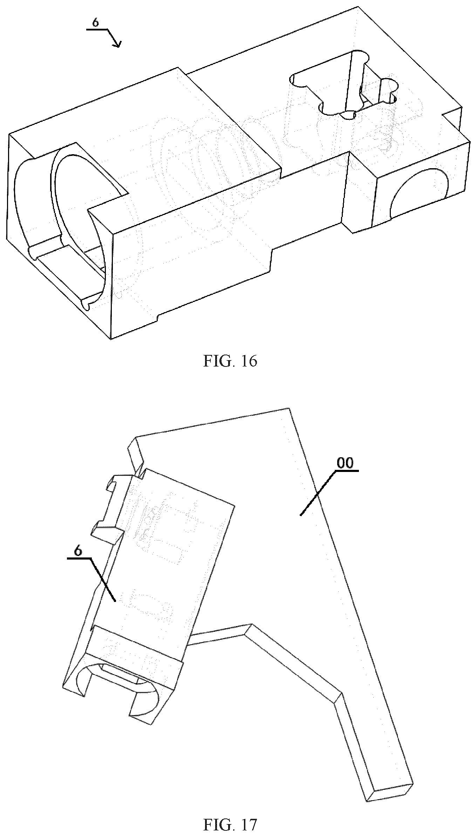

Specifically, the case where the lens barrel 41 and the mounter unit 42 are designed as the independent structures is as shown in Fig. 16. Fig. 16 shows a schematic structural diagram of a lens barrel structure of optical components of a LiDAR, provided in embodiments of this disclosure.

As shown in the figure, the optomechanics module 4 is disassembled into the independent lens barrels that include all the optics devices 5, so that regions related to the optics devices 5 with high processing accuracy requirements can be independent therefrom, thereby lowering the overall processing accuracy requirements for the housing of the large-sized LiDAR, and reducing costs.

In an embodiment, the lens barrel structure of optical components 6 is integrally formed with an emitter module fixing portion 00 of the LiDAR, and the emitter module fixing portion 00 can fixedly mount the emitter module 2.

For the specific structure, reference can be made to Fig. 17. Fig. 17 shows a schematic diagram of a partial structure of a LiDAR, provided in embodiments of this disclosure.

As shown in the figure, such an arrangement can improve the positioning accuracy and thermal adaptability between the emitter board 22 and the optics device 5.

In another embodiment, the lens barrel structure of optical components 6 is integrally formed with an emitter module fixing portion 00 of the LiDAR and a receiver module fixing portion 01 of the LiDAR, and the receiver module fixing portion 01 can fixedly mount the receiver module 3.

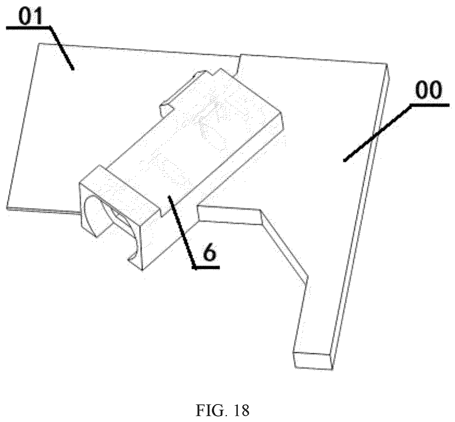

For the specific structure, reference can be made to Fig. 18. Fig. 18 shows a schematic diagram of another partial structure of a LiDAR, provided in embodiments of this disclosure.

As shown in the figure, such an arrangement can further improve the positioning accuracy and thermal adaptability between the emitter board 22 and the optics device 5 and between the receiver board 32 and the optics device.

When the lens barrel 41 and the mounter unit 42 are of an integrally formed structure (i.e., the lens barrel structure of optical components 6), in an embodiment, the mounter unit 42 and the lens barrel 41 are located on the same surface of the optomechanics module 4.

In this way, the processing of the lens barrel 41 and the mounter unit 42 can be facilitated, thereby optimizing the assembly operation.

Although the embodiments of this disclosure are disclosed as above, this disclosure is not limited thereto. Any of those skilled in the art can make various changes and modifications without departing from the spirit and scope of this disclosure, so that the scope of protection of this disclosure shall be subject to the scope defined by the claims.

## Claims

1. A LiDAR, comprising:
an emitter module configured to emit a detection laser beam;
a receiver module configured to receive an echo laser beam of the detection laser beam reflected by a target object;
a scanner module configured to scan the detection laser beam and the echo laser beam; and
an optomechanics module having a preset height and configured to mount an optics device of the LiDAR,
wherein the emitter module and the receiver module are arranged on two sides of the optomechanics module , respectively; and
the emitter module, the receiver module, and the scanner module are arranged within the preset height of the optomechanics module.

2. The LiDAR according to claim 1, wherein the scanner module comprises:
a first scanner module configured to scan the laser beam in a first direction; and
a second scanner module configured to scan the laser beam in a second direction perpendicular to the first direction.

3. The LiDAR according to claim 1, wherein in a height direction of the LiDAR, a ratio of a height of the scanner module to a height of the LiDAR is greater than or equal to 0.72.

4. The LiDAR according to claim 2, wherein a ratio of a height of the first scanner module to a height of the LiDAR is greater than or equal to 0.72.

5. The LiDAR according to claim 2, wherein the first scanner module comprises:
a first scanning mirror; and
a first driver device, wherein a ratio of a height of the first scanning mirror to a height of the first driver device is 1.

6. The LiDAR according to claim 5, wherein the first driver device comprises:
a magnetic component; and
a fixing component that comprises a torsion beam configured to fix the first scanning mirror, wherein the torsion beam has an extension direction parallel to the second direction and is configured to drive the first scanning mirror to reciprocate with the torsion beam as an axis,
and the magnetic component and the first scanning mirror are arranged on two sides of the fixing component , respectively.

7. The LiDAR according to claim 2, wherein the second scanner module is configured to scan and direct a first scanned laser beam formed by the first scanner module to the outside of the LiDAR, and scan and direct the echo laser beam onto the first scanner module.

8. The LiDAR according to claim 2, wherein a ratio of a height of the second scanner module to a height of the LiDAR is greater than or equal to 0.8.

9. The LiDAR according to claim 2, wherein the second scanner module comprises:
a second scanning mirror; and
a second driver device, wherein a ratio of a height of the second scanning mirror to a height of the second driver device is greater than 1.

10. The LiDAR according to claim 2, wherein an angle between an optical axis of the laser beam directed onto a first scanning mirror of the first scanner module and the first scanning mirror at an initial position ranges from 50° to 60°.

11. The LiDAR according to claim 2, wherein an angle between an optical axis of a first scanned laser beam formed by the first scanner module at an initial position and a second scanning mirror of the second scanner module at an initial position ranges from 30° to 40°, and an optical axis of a second scanned laser beam formed by reflecting the first scanned laser beam by the second scanning mirror at the initial position is perpendicular to a window of the LiDAR.

12. The LiDAR according to claim 2, wherein with an initial position of a first scanning mirror of the first scanner module as a center, the first scanning mirror reciprocates at an angle ranging from 4° to 8° in the second direction, and is configured to scan the laser beam directed onto the first scanning mirror in the first direction.

13. The LiDAR according to claim 2, wherein with an initial position of a second scanning mirror of the second scanner module as a center, the second scanning mirror reciprocates at an angle ranging from 15° to 30° in the first direction, and is configured to scan the laser beam directed onto the second scanning mirror in the second direction.

14. The LiDAR according to claim 2, wherein a scanning direction of the first scanner module is a fast-axis direction of the scanner module when scanning, and a scanning direction of the second scanner module is a slow-axis direction of the scanner module when scanning.

15. The LiDAR according to claim 1, wherein the emitter module and the receiver module are mounted on the optomechanics module, and extension directions of the emitter module and the receiver module are perpendicular to a height direction of the LiDAR.

16. The LiDAR according to claim 1, wherein in a height direction of the LiDAR, the emitter module and the receiver module are arranged on two sides of the optomechanics module , respectively.

17. The LiDAR according to claim 16, wherein the emitter module and the receiver module are obliquely and symmetrically arranged on two sides of the optomechanics module , respectively.

18. The LiDAR according to claim 1, wherein the optics device comprises
a receiving deflecting mirror configured to reflect the received echo laser beam through the optomechanics module and vertically direct the echo laser beam onto the receiver module.

19. The LiDAR according to claim 1, wherein the optics device comprises
a light homogenizing component arranged close to one end of the emitter module and configured to change a shape of a light spot formed by the detection laser beam.

20. The LiDAR according to claim 1, wherein the optics device comprises
an emitting deflecting mirror arranged adjacent to the emitter module along a height direction of the LiDAR and configured to reflect the detection laser beam through the optomechanics module and vertically direct the detection laser beam onto the optics device of the optomechanics module.

21. The LiDAR according to claim 1, wherein the optics device comprises
a collimator unit, comprising:
a fast-axis collimating lens arranged at an upstream part of a light homogenizing component along a transmission direction of the detection laser beam and configured to change a shape of a light spot formed by the detection laser beam in a fast-axis direction; and
a slow-axis collimating lens arranged at a downstream part of the light homogenizing component along the transmission direction of the detection laser beam and configured to change a shape of a light spot formed by the detection laser beam in a slow-axis direction.

22. The LiDAR according to claim 19, wherein the light homogenizing component comprises a cylindrical lens array.

23. The LiDAR according to claim 22, wherein the cylindrical lens array comprises a plurality of cylindrical lens units arranged in sequence along a height direction of the LiDAR and configured to change the shape of the light spot formed by the detection laser beam.

24. The LiDAR according to claim 1, wherein the optomechanics module comprises a lens barrel and a mounter unit, and the optics device comprises:
a positive lens, a wave plate, and a first negative lens that are mounted in the lens barrel; and
a second negative lens, a beam splitter unit, a collimator unit, a receiving deflecting mirror, and a light homogenizing component that are mounted in the mounter unit communicating with the lens barrel.

25. The LiDAR according to claim 24, wherein the mounter unit and the lens barrel are arranged in the optomechanics module or a lens barrel structure of optical components, and the lens barrel structure of optical components is detachably mounted on the optomechanics module.

26. The LiDAR according to claim 24, wherein the mounter unit and the lens barrel are located on a same surface of the optomechanics module.

27. The LiDAR according to claim 24, wherein the mounter unit is arranged in the optomechanics module, and the lens barrel is detachably mounted in the optomechanics module.

28. The LiDAR according to claim 25, wherein the lens barrel structure of optical components is integrally formed with an emitter module fixing portion of the LiDAR, and the emitter module fixing portion is configured to fixedly mount the emitter module.

29. The LiDAR according to claim 25, wherein the lens barrel structure of optical components is integrally formed with an emitter module fixing portion of the LiDAR and a receiver module fixing portion of the LiDAR, and the receiver module fixing portion is configured to fixedly mount the receiver module.
